# EUROPÄISCHE PATENTSCHRIFT

(11) **EP 1 488 977 B1**
(45) Veröffentlichungstag und Bekanntmachung des Hinweises auf die Patenterteilung: **10.01.2007**
(21) Anmeldenummer: 04004105.5
(22) Anmeldetag: 24.02.2004
(51) Int. Cl.: B61D 19/00, B60J 5/06, E05D 15/10

(54) **Ausstellschiebetürsystem für ein Fahrzeug**
Plugging and sliding door for a vehicle.
Porte louvoyante coulissante pour véhicule.

(30) Priorität: 16.02.2004 EP 04003377; 21.06.2003 DE 10327982
(43) Veröffentlichungstag der Anmeldung: 22.12.2004
(73) Patentinhaber: HÜBNER GmbH, 34123 Kassel (DE)
(72) Erfinder: Krug, Uwe, 34302 Guxhagen (DE); Baake, Achim, 34479 Breuna-Wettesingen (DE)
(74) Vertreter: WALTHER, WALTHER & HINZ Patentanwälte - European Patent Attorneys

(56) Entgegenhaltungen:
- EP-A- 0 875 434
- EP-A- 1 314 626
- WO-A-02/42105

## Beschreibung

Die Erfindung betrifft ein Ausstellschiebetürsystem für ein Fahrzeug, umfassend mindestens einen Türflügel, wobei der mindestens eine Türflügel im geschlossenen Zustand außenhautbündig in der Türöffnung einsitzt, und wobei sich der eine Türflügel in Offenstellung außenseitig vor der Fahrzeugwandung befindet und in dieser Stellung die Türöffnung freigibt, wobei der mindestens eine Türflügel an einem Schlitten angeordnet ist, wobei der Schlitten Längsführungsmittel für den mindestens einen Türflügel aufweist, und wobei der Schlitten in der Türöffnung im Kopfbereich durch eine Montageplatte quer zur Fahrzeuglängsachse verschieblich aufnehmbar ist, wobei sowohl zum Antrieb des mindestens einen Türflügels als auch zur Verschiebung des Schlittens quer zur Fahrzeuglängsachse ein Antrieb vorgesehen ist.

Schiebetüren der eingangs genannten Art sind aus dem Stand der Technik hinreichend bekannt. So ist beispielsweise aus der EP 517 334 ein Schwenkschiebetürsystem für Fahrzeuge bekannt, bei dem an einer Montageplatte, die im Kopfbereich der Türöffnung angebracht wird, ein quer zur Fahrzeuglängsachse beweglicher Schlitten vorgesehen ist, wobei der Schlitten die Türflügel aufnimmt. Sowohl zur Bewegung des Schlittens als auch zur Bewegung der Türflügel parallel zur Längsachse des Wagenkastens ist ein Antrieb vorgesehen, der mit dem Schlitten bzw. den Türflügeln verbunden ist, der aber ortsfest an der Montageplatte befestigt ist. Das heißt, dass bei dieser Schwenkschiebetür der Antrieb nicht mit dem Schlitten ausfährt.

Ganz anders stellt sich das Schwenkschiebetürsystem für ein Fahrzeug gemäß der EP 820 889 dar. Dort ist ein einer Montageplatte gleichzusetzender Rahmen vorgesehen, der im Montagezustand fest mit dem Fahrzeug verbunden ist. Dieser Montagerahmen nimmt den quer zur Fahrzeuglängsachse beweglichen Schlitten auf, wobei der Antriebsmotor für die Türflügelbewegungen einen Teil dieses Schlittens bildet.

Aus der WO 02/42105 ist nun eine Ausstellschiebetür bekannt, bei der ein Schlitten vorgesehen ist, der im Kopfbereich an der Türöffnung quer zur Fahrzeuglängsachse verschieblich ist, um die Türflügel, die an dem Schlitten angeordnet sind, vor die Fahrzeugwandung zu stellen. Nach Abschluss der Querbewegung erfolgt das Verschieben der Türflügel parallel zur Längsachse des Fahrzeugs, wodurch die Türöffnung freigegeben wird. Hierbei ist vorgesehen, dass der Antrieb Bestandteil des Schlittens ist. Dieser auf dem Schlitten angeordnete Antrieb besorgt zum einen die Bewegung des Schlittens und zum anderen die Öffnungsbewegung der Türflügel parallel zur Längsachse des Fahrzeugs. Das geschieht im Einzelnen dadurch, dass die Reaktionskraft des Antriebs für die Längsbewegung der Türflügel während der Ausstellbewegung des Schlittens benutzt wird, um den Schlitten auszustellen. Bei diesem bekannten Ausstellschiebetürsystem ist, wie bereits ausgeführt, der Antrieb auf dem Schlitten angeordnet. Dies bedingt eine nicht unerhebliche Bauhöhe.

Der Erfindung liegt daher die Aufgabe zugrunde, ein Ausstellschiebetürsystem der eingangs genannten Art bereitzustellen, das eine geringere Bauhöhe aufweist und das darüber hinaus robust im Aufbau, einfach in der Montage und preiswert in der Herstellung ist.

Die Aufgabe wird erfindungsgemäß durch die Merkmale des Anspruchs 1, gelöst, wobei der Antrieb auf der Montageplatte angeordnet ist und durch eine Übertragungseinrichtung sowohl die Ausstellbewegung des Schlittens, als auch die seitliche Verschiebung des mindestens einen Türflügels bewirkt und wobei der Antrieb auf der Montageplatte verschieblich angeordnet ist. Das heißt, dass der Antrieb, der beweglich auf der Montageplatte angeordnet ist, sowohl die Ausstellbewegung des Schlittens bewirkt, als auch die Längsverschiebung des mindestens einen Türflügels parallel zur Fahrzeugwandung, nachdem die Ausstellbewegung erfolgt ist.

So ist vorgesehen, dass während der Ausstellbewegung des Schlittens der Antrieb relativ zur Übertragungseinrichtung verschieblich, und zwar quer zur Ausstellbewegung des Schlittens verschieblich, auf der Montageplatte angeordnet ist, was bedeutet, dass die Übertragungseinrichtung fest auf der Montageplatte angeordnet ist.

Vorteilhafte Merkmale der Erfindung sind den Unteransprüchen zu entnehmen.

Um die Ausstellbewegung des Schlittens zu bewerkstelligen, besitzt die Montageplatte mindestens eine Kulissenführung für den Schlitten, wobei der Schlitten ein Führungsglied zur Führung durch die Kulissenführung zeigt.

Durch die Kulissenführung wird erreicht, dass schlussendlich die Ausstellbewegung quer zur Längsachse des Schlittens bzw. auch quer zur Fahrzeuglängsachse erfolgt.

Im Einzelnen ist in diesem Zusammenhang vorgesehen, dass die Kulissenführung auf der Montageplatte verschieblich angeordnet ist. Die Bewegung der Kulissenführung erfolgt in gleicher Richtung wie die des Antriebs. Hieraus wird deutlich, dass die Kulissenführung ganz ähnlich wie der Antrieb eine Bewegung relativ zur Montageplatte ausführt, und zwar quer zur Ausstellbewegung des Schlittens. Um bei Bewegung der Kulissenführung parallel zur Schlittenlängsachse die gewünschte Ausstellbewegung des Schlittens bewerkstelligen zu können, ist die Kulissenführung mit einem in Richtung der Verschiebung des Antriebs auf der Montageplatte ausgerichteten, schräg verlaufenden Schlitz versehen, der endseitig einen parallel zur Richtung der Verschiebung des Antriebs ausgerichteten Fuß aufweist. Der Schlitz mit dem Fuß vermittelt in etwa das Aussehen eines Hockey-Schlägers. Dieser schräg verlaufende Schlitz, in der Kulissenführung in Verbindung mit der Verschieblichkeit des Motors und der Verschieblichkeit der Kulissenführung als solcher auf dem Montagerahmen, bewirkt, dass der Schlitten die gewünschte Ausstellbewegung ausführt. Die Kulissenführung und der Antrieb sind hierbei auf einer auf der Montageplatte angeordneten Schiene angebracht, was Kosten spart.

Die Übertragungseinrichtung umfasst nach einem weiteren Merkmal der Erfindung einen umlaufenden Zahnriemen, der auf der Montageplatte, z. B. mittels zweier beabstandet zueinander angeordneter Rollen, drehbar gelagert ist.

Nach einem weiteren Merkmal der Erfindung besitzt der Antrieb, beispielsweise ein Elektromotor mit nachgeschaltetem Getriebe, ein Ritzel. Dieses Ritzel steht in Eingriff mit dem Zahnriemen. Während der Ausstellbewegung des Schlittens rollt das Ritzel auf dem Zahnriemen ab; nach Abschluss der Ausstellbewegung hingegen, d. h., wenn der mindestens eine Türflügel aus dem Bereich der Türöffnung herausgelangt ist, wird durch das Ritzel der Zahnriemen angetrieben mit der Folge, dass der mindestens eine Türflügel parallel zur Fahrzeugwandung verschoben wird. Während durch den Antrieb die Ausstellbewegung bewirkt wird, bewegen sich der Antrieb und die Kulissenführung entlang dem Zahnriemen bzw. allgemein relativ zum Übertragungsmittel und parallel zu diesem, wobei gleichzeitig zu diesem Bewegungsablauf das Führungsglied des Schlittens entlang dem Schlitz in der Kulissenführung gleitet, und zwar von dem Fuß des Schlitzes ausgehend, der die Geschlossenstellung des Schlittens kennzeichnet, bis zu dem dem Fuß entgegengesetzten Ende des Schlitzes, das das Ende der Ausstellbewegung des Schlittens kennzeichnet. Zur Kraftübertragung von dem Zahnriemen bzw. der Übertragungseinrichtung auf den Schlitten besitzt der Schlitten mindestens einen Mitnehmer, der allerdings auch mit dem mindestens einen Türflügel in Verbindung steht. Ein solcher Mitnehmer weist eine Längsführung auf, in der ein an der Übertragungseinrichtung angeordnetes Gleitstück geführt ist. Diese Längsführung des Mitnehmers erstreckt sich in Ausstellrichtung des Schlittens, d. h. dann, wenn die Ausstellbewegung abgeschlossen ist, hat das Gleitstück die Längsführung einmal durchlaufen.

Schlussendlich ist, um die Ausstellbewegung zu bewerkstelligen, auf der Montageplatte eine Nockenspur angeordnet, in die ein an dem mindestens einen Türflügel angebrachter Nocken eingreift. Der Nocken besitzt hierbei vorzugsweise einen Arm, der mit dem mindestens einen Türflügel in Verbindung steht. Die Nockenspur selbst weist einen parallel zur Ausstellbewegung des Schlittens verlaufenden ersten Abschnitt auf, an den sich ein parallel zur Bewegung des mindestens einen Türflügels ausgerichteter zweiter Abschnitt anschließt.

Solange sich der Nocken im Bereich des ersten Abschnittes befindet, ist eine Seitwärtsbewegung des mindestens einen Türflügels nicht möglich. Die Länge dieses ersten Abschnittes entspricht im Wesentlichen genau der Länge der Ausstellbewegung des Schlittens, so dass, nachdem der Nocken den ersten Abschnitt der Nockenspur verlassen hat, durch den Antrieb die Verschiebung des mindestens einen Türflügels erfolgt. D. h. , dass der zweite Abschnitt sich an den ersten Abschnitt in Richtung der Ausstellbewegung anschließt.

Zur Verschiebung des mindestens einen Türflügels ist der mindestens eine Türflügel an dem Schlitten durch Längsführungsmittel in Form einer teleskopierbaren Schiene angeordnet, wobei der oben bereits erwähnte Mitnehmer an dieser Schiene angeordnet sein kann.

Anhand der Zeichnungen wird die Erfindung nachstehend beispielhaft näher erläutert.
- Fig. 1: zeigt das Ausstellschiebetürsystem in perspektivischer Darstellung bei geschlossenen Türflügeln;
- Fig. 2: zeigt das Ausstellschiebetürsystem in perspektivischer Darstellung in Offenstellung;
- Fig. 3: zeigt einen Schnitt gemäß der Linie IV - IV aus Fig. 1;
- Fig. 4: zeigt einen Schnitt gemäß der Linie V - V aus Fig. 1;

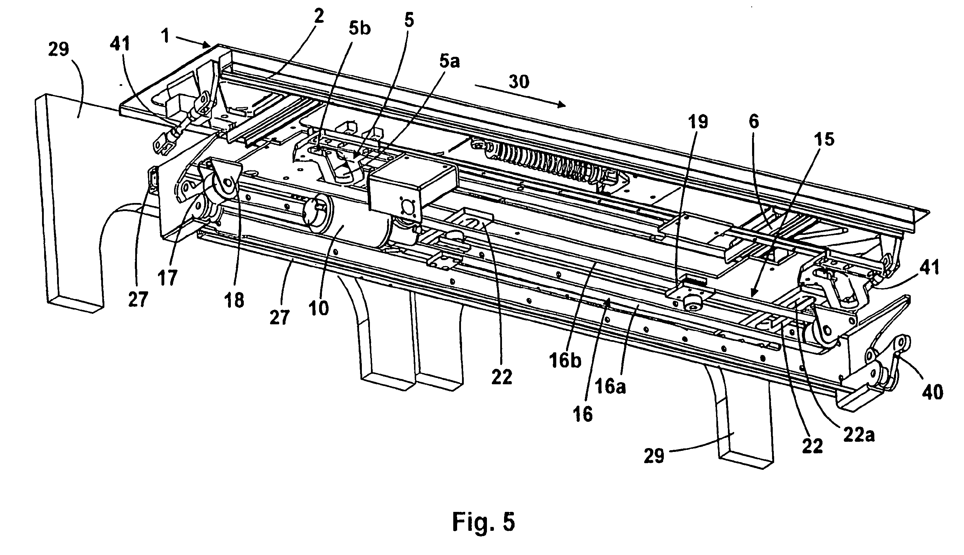

- Fig. 5: zeigt eine Explosionsdarstellung des Ausstellschiebetürsystems gemäß Fig. 1;

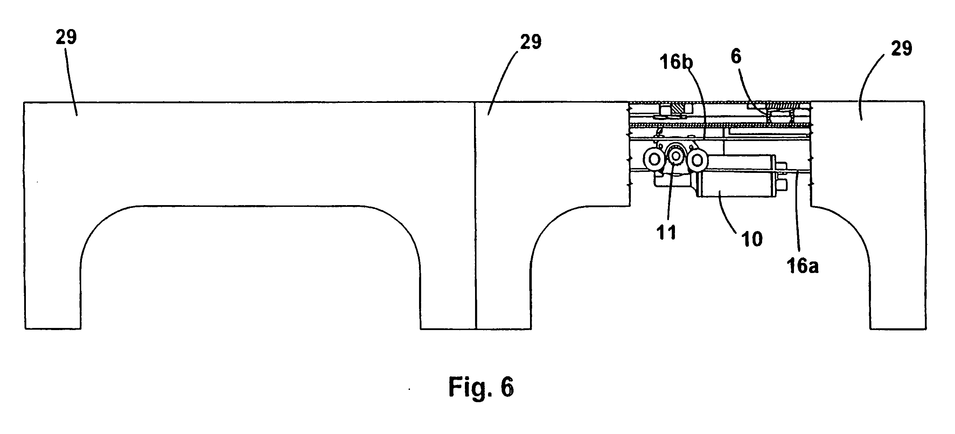

- Fig. 6: zeigt eine Ansicht von vorn;
- Fig. 7: zeigt die Montageplatte in einer perspektivischen Ansicht;
- Fig. 8: zeigt den Schlitten in einer perspektivischen Ansicht;
- Fig. 9: zeigt den auf der Schiene angeordneten Antrieb mit den Kulissenführungen sowie die Übertragungseinrichtung.

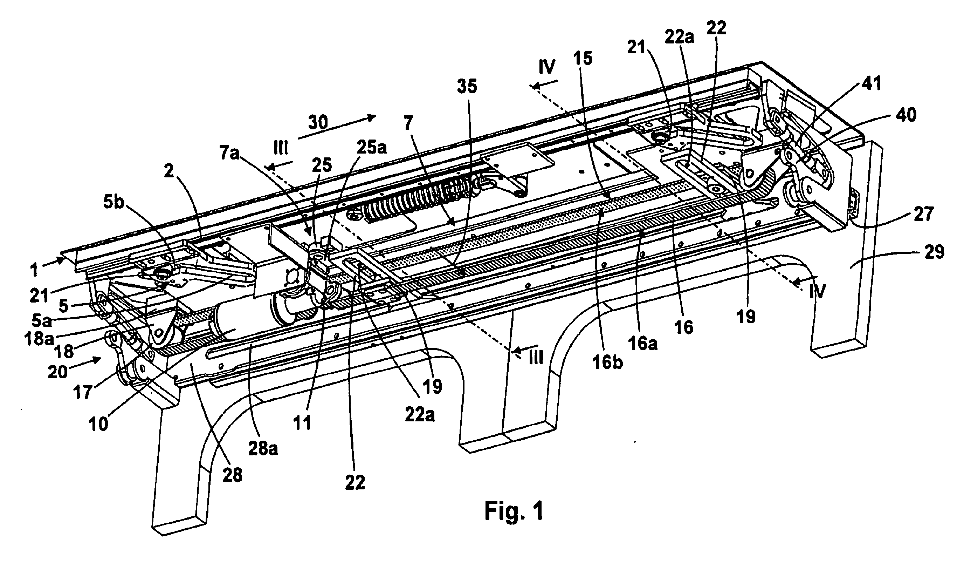

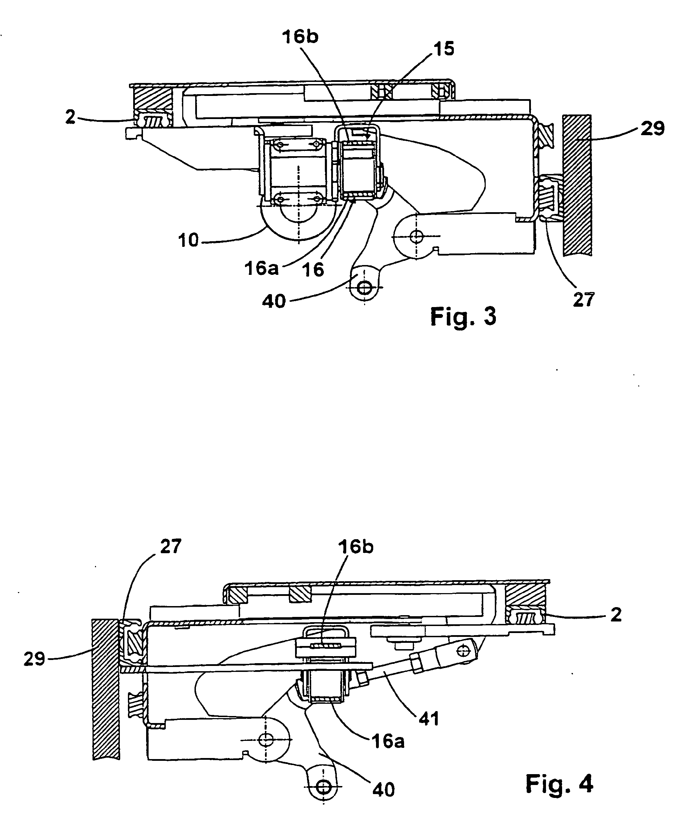

Gemäß der Darstellung aus den Figuren 1 und 4 nimmt die mit 1 bezeichnete Montageplatte den mit 20 bezeichneten Schlitten auf. Die Montageplatte 1 besitzt eine Schiene 2, auf der der mit 10 bezeichnete Antriebsmotor entlang des Pfeiles 30 verschieblich gelagert ist. Die Schiene 2 nimmt darüber hinaus die beiden Kulissenführungen 5 auf, wobei eine jede Kulissenführung 5 einen schräg verlaufenden Schlitz 5a und einen daran sich anschließenden parallel zur Richtung der Verschiebung des Antriebs ausgerichteten Fuß 5b aufweist. Durch diesen Schlitz mit dem sich daran anschließenden Fuß wird das Führungsglied 21 des Schlittens 20 aufgenommen. Des Weiteren besitzt die Montageplatte 1 die Nockenspur 7, wobei die Nockenspur 7 zwei Abschnitte 7a und 7b aufweist. Der erste Abschnitt 7a verläuft im Wesentlichen parallel zur Ausstellbewegung des Schlittens 20, wohingegen der zweite Abschnitt 7b der Nockenspur 7 parallel zur Bewegung des mindestens einen Türflügels 29 ausgerichtet ist. Von der Nockenspur 7 wird ein Nocken 25 aufgenommen, der an einem Nockenarm 25a angeordnet ist, der wiederum an der teleskopierbaren Schiene 27 zur Aufnahme des Türflügels befestigt ist.

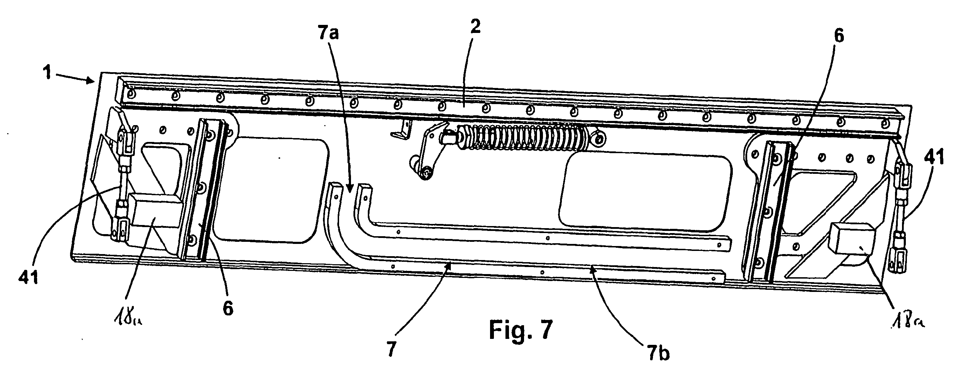

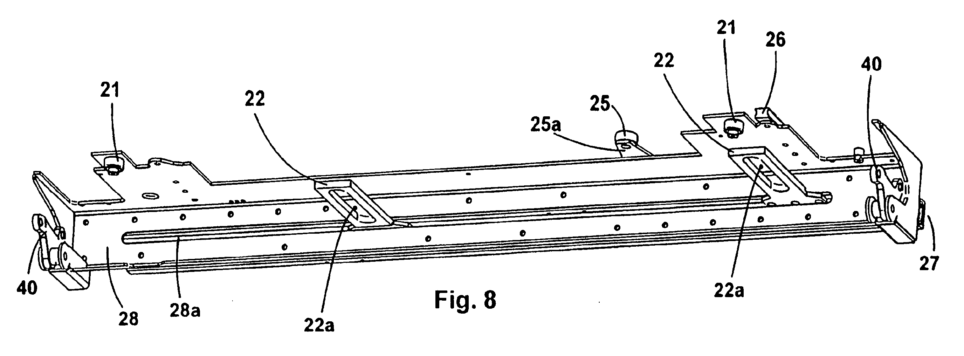

Die Montageplatte 1 weist des weiteren zwei Schlittenführungen 6 für den Schlitten 20 auf, wobei der Schlitten 20 auf seiner Unterseite entsprechende Führungsmittel 26 besitzt. Durch die Schlittenführungen 6 und die Führungsmittel 26 ist der Schlitten 20 von der Montageplatte 1 in Richtung der Ausstellbewegung (Pfeil 35) beweglich gehalten (Fig. 7, Fig. 8).

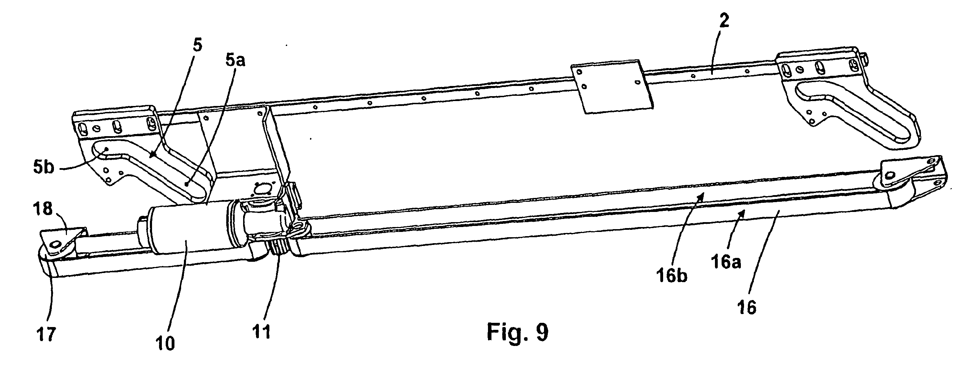

Auf der Montageplatte 1 befindet sich darüber hinaus die insgesamt mit 15 bezeichnete Übertragungseinrichtung. Die Übertragungseinrichtung umfasst den Zahnriemen 16, der endseitig jeweils eine Rolle 17 aufweist, wobei eine jede Rolle 17 in einem Rollenbock 18 gelagert ist, der schlussendlich auf der Montageplatte 1 auf den Montageklötzen 18a befestigt ist (Fig. 9).

Der mit 10 bezeichnete Antriebsmotor besitzt das Ritzel 11, das mit dem Zahnriemen 16 in Eingriff steht. Hierbei ist der Zahnriemen 16 im Bereich des Ritzels 11 nach Art einer offenen Schlaufe geführt. Auf dem Obertrum 16a und auf dem Untertrum 16b des Zahnriemens 16 ist jeweils einander diagonal gegenüberliegend ein Gleitstück 19 angeordnet, das von den am Schlitten 20 angeordneten Mitnehmern 22 erfasst wird. Der Mitnehmer 22 ist im Einzelnen mit den beiden Türflügeln 29 und speziell mit den teleskopierbaren Schienen 27 der Türflügel 29 verbunden, um nach Abschluss der Ausstellbewegung des Schlittens die Öffnungsbewegung der Türflügel zu bewirken. Im Einzelnen weist in diesem Zusammenhang der Schlitten 20 eine Vorderwand 28 zur Aufnahme der teleskopierbaren Schienen 27 der beiden Türflügel auf. In der Vorderwand 28 befindet sich ein Schlitz 28a, durch den der Mitnehmer 22 mit den Schienen 27, an denen die Türflügel angeordnet sind, verbunden ist. Zur Aufnahme des Gleitstückes 19 besitzt der Mitnehmer 22 jeweils eine Längsführung 22a, in der das Gleitstück 19 während der Ausstellbewegung des Schlittens, d. h. der Bewegung des Schlittens relativ zur Montageplatte, entlang gleitet.

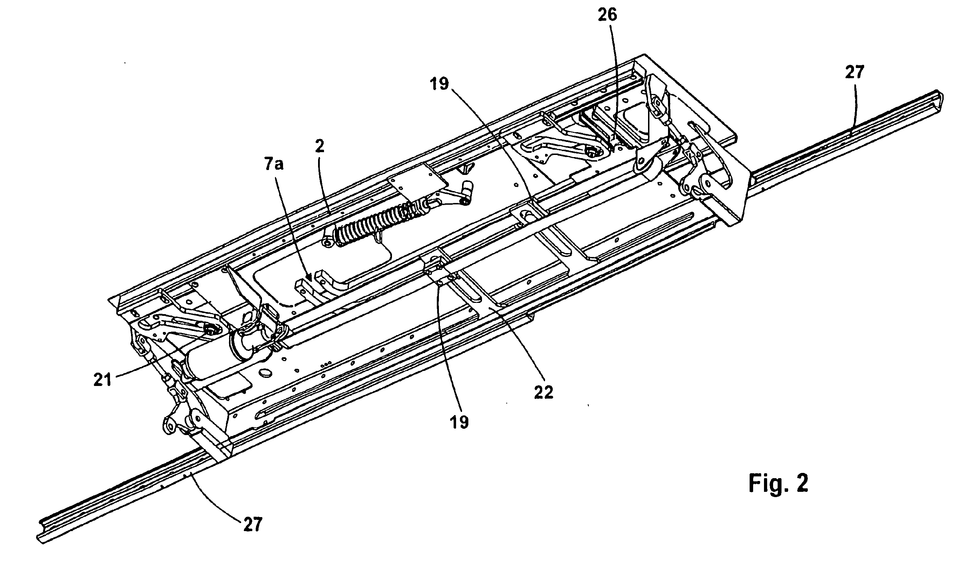

Die Funktionsweise des Ausstellschiebetürsystems wird nun anhand der Figuren 1 und 2 dargestellt, wobei die Figuren 1 und 2 die Offenstellung bzw. die Geschlossenstellung zeigen. Bei Antrieb des Motors 10 setzt sich für die Ausstellbewegung das Ritzel 11 in Drehbewegung. Das Ritzel 11 steht in Eingriff mit dem Zahnriemen 16. Das Führungsglied 21 befindet sich in der Ausgangsstellung (Geschlossenstellung) im Bereich des Fußes 5b der Kulissenführung 5. Bei Drehung des Ritzels 11 wandert der Motor 10 auf der Schiene 2 entlang des Pfeiles 30; gleichfalls wird die Kulissenführung 5 auf der Schiene 2 in Richtung des Pfeiles 30 verschoben. Dies deshalb, weil die Seitwärtsbewegung der beiden Türflügel 29 in dieser Position aufgrund der Ausbildung der Nockenspur 7 nicht möglich ist. Denn zu diesem Zeitpunkt befindet sich der Nocken 25 in dem Bereich 7a der Nockenspur 7.

Gelangt nun das Führungsglied 21 aus dem Bereich des Fußes 5b der Kulissenführung 5 in den Bereich des Schlitzes 5a, gleitet das Gleitstück 17 entlang der Längsführung 22a des Mitnehmers 22 in Richtung des Pfeiles 35. Hierbei befindet sich der Nocken 25 noch im Bereich 7a der Nockenspur 7. Ist das Gleitstück am Ende der Längsführung 22a angelangt, dann ist die Ausstellbewegung des Schlittens 20 abgeschlossen. In dem Moment befindet sich der Nocken 25 in dem Bereich 7b der Nockenspur 7, wobei dann das Ritzel 11 nicht mehr auf dem Zahnriemen abrollt, sondern tatsächlich den Zahnriemen bewegt, mit der Folge, dass durch die beiden auf dem Zahnriemen angeordneten Gleitstücke 17, die sich in der Längsführung 22a des Mitnehmers 22 befinden, durch den Mitnehmer 22, der an den beiden Schienen 27 für die Türflügel 29 angeordnet ist, tatsächlich nunmehr eine seitliche Verschiebung der Türflügel 29 erfolgt.

Zu bemerken ist noch, dass der Fuß 5b der Kulissenführung 5, der - wie bereits an anderer Stelle erläutert - parallel zur Schiene 2 verläuft, schlussendlich in Verbindung mit dem Führungsglied 21 des Schlittens 20 dafür sorgt, dass bei geschlossener Tür die Türflügel auch bei von innen wirkender Kraft, beispielsweise durch eine sich dagegenstemmende Person, nicht geöffnet werden können; der Fuß dient somit der Verriegelung der Türflügel bei stillstehendem Motor.

Seitlich am Schlitten befindet sich ein verschwenkbar gelagerter Kniehebel 40, der durch einen Arm 41 schwenkgelenkig mit der Montageplatte 1 in Verbindung steht. Bei Bewegung des Schlittens 20 relativ zur Montageplatte 1 wird der Kniehebel 40 verschwenkt. An dem Kniehebel 40 befindet sich ein nicht dargestelltes Gestänge, mit dessen Hilfe dafür gesorgt wird, dass auch das untere Ende des Türflügels eine entsprechend dem oberen Ende des Türflügels entsprechende Ausstellbewegung ausführt.

## Patentansprüche

1. Ausstellschiebetürsystem für ein Fahrzeug, umfassend mindestens einen Türflügel (29), wobei der mindestens eine Türflügel (29) im geschlossenen Zustand außenhautbündig in der Türöffnung einsitzt, und wobei sich der eine Türflügel (29) in Offenstellung außenseitig vor der Fahrzeugwandung befindet, und dieser Stellung die Türöffnung freigibt, wobei der mindestens eine Türflügel (29) an einem Schlitten (20) angeordnet ist, wobei der Schlitten (20) Längsführungsmittel (27) für den mindestens einen Türflügel (29) aufweist und wobei der Schlitten (20) in der Türöffnung im Kopfbereich durch eine Montageplatte (1) quer zur Fahrzeuglängsachse verschieblich aufnehmbar ist, wobei sowohl zum Antrieb des mindestens einen Türflügels (29), als auch zur Verschiebung des Schlittens (20) quer zur Fahrzeuglängsachse ein Antrieb (10) vorgesehen ist,
**dadurch gekennzeichnet,**
**dass** der Antrieb (10) auf der Montageplatte (1) angeordnet ist, wobei der Antrieb (10) durch eine Übertragungseinrichtung (15) sowohl die Ausstellbewegung des Schlittens (20), als auch die seitliche Verschiebung des mindestens einen Türflügels (29) bewirkt und wobei der Antrieb (10) durch eine auf der Montageplatte angeordnete Schiene (2) quer zur Ausstellbewegung des Schlittens verschieblich geführt ist.

2. Ausstellschiebetürsystem nach Anspruch 1,
**dadurch gekennzeichnet,**
**dass** während der Ausstellbewegung des Schlittens (20) der Antrieb (10) relativ zur Übertragungseinrichtung (15) verschieblich auf der Montageplatte (1) angeordnet ist.

3. Ausstellschiebetürsystem nach Anspruch 1,
**dadurch gekennzeichnet,**
**dass** auf der Montageplatte (1) mindestens eine Kulissenführung (5) für den Schlitten (20) vorgesehen ist, wobei der Schlitten (20) ein Führungsglied (21) zur Führung durch die Kulissenführung (5) besitzt.

4. Ausstellschiebetürsystem nach Anspruch 3,
**dadurch gekennzeichnet,**
**dass** die Kulissenführung (5) auf der Montageplatte (1) verschieblich angeordnet.

5. Ausstellschiebetürsystem nach Anspruch 3 oder 4
**dadurch gekennzeichnet,**
**dass** die Kulissenführung (5) einen in Richtung der Verschiebung des Antriebs (10) auf der Montageplatte (1) ausgerichteten schräg verlaufenden Schlitz (5a) aufweist, der endseitig einen parallel zur Richtung der Verschiebung des Antriebs (10) ausgerichteten Fuß (5b) aufweist.

6. Ausstellschiebetürsystem nach Anspruch 4,
**dadurch gekennzeichnet,**
**dass** die Kulissenführung und der Antrieb (10) auf der auf der Montageplatte (1) angeordneten Schiene (2) angebracht sind.

7. Ausstellschiebetürsystem nach Anspruch 1,
**dadurch gekennzeichnet,**
**dass** die Übertragungseinrichtung (15) einen umlaufenden Zahnriemen (16) umfasst, der auf der Montageplatte (1) angeordnet ist.

8. Ausstellschiebetürsystem nach Anspruch 7,
**dadurch gekennzeichnet,**
**dass** der Antrieb (10) ein Ritzel (11) umfasst, das mit dem Zahnriemen (16) in Eingriff steht.

9. Ausstellschiebetürsystem nach Anspruch 1,
**dadurch gekennzeichnet,**
**dass** die Übertragungseinrichtung (15) durch mindestens einen Mitnehmer (22) mit dem mindestens einen Türflügel in Verbindung steht.

10. Ausstellschiebetürsystem nach Anspruch 9,
**dadurch gekennzeichnet,**
**dass** der Mitnehmer (22) eine Längsführung (22a) aufweist, in der ein an der Übertragungseinrichtung (15) angeordnetes Gleitstück (19) geführt ist.

11. Aussteilschiebetürsystem nach Anspruch 9,
**dadurch gekennzeichnet,**
**dass** sich die Längsführung (22a) des Mitnehmers (22) in Ausstellrichtung des Schlitten (1) erstreckt.

12. Ausstellschiebetürsystem nach Anspruch 9,
**dadurch gekennzeichnet,**
**dass** auf der Montageplatte (1) eine Nockenspur (7) angeordnet ist, in die ein an dem mindestens einen Türflügel angebrachter Nocken (25) eingreift.

13. Ausstellschiebetürsystem nach Anspruch 12,
**dadurch gekennzeichnet,**
**dass** die Nockenspur (7) einen parallel zur Ausstellbewegung verlaufenden ersten Abschnitt (7a) aufweist, an den sich ein parallel zur Bewegung des mindestens einen Türflügels ausgerichteter zweiter Abschnitt (7b) anschließt.

14. Ausstellschiebetürsystem nach Anspruch 13,
**dadurch gekennzeichnet**
**dass** der zweite Abschnitt (7b) sich an den ersten Abschnitt (7a) in Richtung der Ausstellbewegung anschließt.

## Claims

1. A sliding plug door system for a vehicle, comprising at least one door wing (29), said at least one door wing (29) sitting in the door opening so as to be flush with the outer skin in the closed condition and said one door wing (29) being located on the outside in front of the vehicle wall in the open position, and liberating the door opening in this position, the at least one door wing (29) being disposed on a slide-block (20), said slide-block (20) comprising longitudinal guide means (27) for the at least one door wing (29) and said slide-block (20) being receivable in the top region of the door opening by a mounting plate (1) so as to be slidable transverse to the longitudinal axis of the vehicle, an operator (10) being provided both for driving the at least one door wing (29) and for displacing said slide-block (20) transverse to the longitudinal axis of the vehicle,
**characterized in**
**that** said operator (10) is disposed on a mounting plate (1), said operator (10) effecting, via a transmission device (15), both the slide-out movement of said slide-block (20) and the lateral displacement of the at least one door wing (29) and said operator (10) being guided in a rail (2) disposed on the mounting plate so as to be displaceable transverse to the slide-out movement of said slide-block.

2. The sliding plug door system as set forth in claim 1,
**characterized in**
**that**, during the slide-out movement of the slide-block (20), the operator (10) is disposed on the mounting plate (1) so as to be displaceable relative to the transmission device (15).

3. The sliding plug door system as set forth in claim 1,
**characterized in**
**that** at least one guide link (5) for the slide-block (20) is provided on the mounting plate (1), said slide-block (20) having a guide member (21) intended to be guided by said guide link (5).

4. The sliding plug door system as set forth in claim 3,
**characterized in**
**that** the guide link (5) is slidably disposed on the mounting plate (1).

5. The sliding plug door system as set forth in claim 3 or 4,
**characterized in**
**that** the guide link (5) comprises an oblique slot (5a) oriented in the direction the operator (10) is being displaced on the mounting plate (1), said slot (5a) comprising at its end a crosshead (5b) oriented parallel to the direction of displacement of the operator (10).

6. The sliding plug door system as set forth in claim 4,
**characterized in**
**that** the guide link and the operator (10) are fastened on the rail (2) disposed on the mounting plate (1).

7. The sliding plug door system as set forth in claim 1,
**characterized in**
**that** the transmission device (15) includes a surrounding toothed belt (16) that is disposed on the mounting plate (1).

8. The sliding plug door system as set forth in claim 7,
**characterized in**
**that** the operator (10) includes a pinion (11) that engages the toothed belt (16).

9. The sliding plug door system as set forth in claim 1,
**characterized in**
**that** the transmission device (15) is connected to the at least one door wing through at least one driver (22).

10. The sliding plug door system as set forth in claim 9,
**characterized in**
**that** the driver (22) comprises a longitudinal guide (22a) in which there is guided a slider (19) disposed on the transmission device (15).

11. The sliding plug door system as set forth in claim 9,
**characterized in**
**that** the longitudinal guide (22a) of the driver (22) extends in the slide-out direction of the slide-block (20).

12. The sliding plug door system as set forth in claim 9,
**characterized in**
**that** a cam track (7), into which a cam (25) mounted on the at least one door wing engages, is disposed on the mounting plate (1).

13. The sliding plug door system as set forth in claim 12,
**characterized in**
**that** the cam track (7) comprises a first portion (7a) that extends parallel to the slide-out movement and is adjoined with a second portion (7b) oriented parallel to the movement of the at least one door wing.

14. The sliding plug door system as set forth in claim 13,
**characterized in**
**that** the second portion (7b) adjoins the first portion (7a) in the direction of the slide-out movement.

## Revendications

1. Système de porte louvoyante pour véhicule, du type comprenant au moins un vantail (29), l'au moins un vantail (29) étant intégré dans l'embrasure de la porte, affleurant l'enveloppe extérieure à l'état fermé et ce vantail (29) se trouvant sur la face extérieure, devant la paroi du véhicule, en position ouverte, libérant l'embrasure dans cette position, l'au moins un vantail (29) étant disposé sur un chariot (20), le chariot (20) comportant des moyens de guidage longitudinal (27) pour l'au moins un vantail (29) et le chariot (20) étant apte à être reçu mobile en coulissement en travers de l'axe longitudinal du véhicule en partie haute de l'embrasure par l'intermédiaire d'une plaque de montage (1), une commande (10) étant prévue, à la fois pour la commande de l'au moins un vantail (29) et pour le déplacement du chariot (20) en travers de l'axe longitudinal du véhicule.
**caractérisé en ce**
**que** la commande (10) est disposée sur la plaque de montage (1) et provoque, par l'intermédiaire d'un organe de transmission (15), à la fois le louvoiement du chariot (20) et le déplacement latéral de l'au moins un vantail (29) et la commande (10) étant guidée mobile en coulissement en travers du louvoiement du chariot dans un rail (2) disposé sur la plaque de montage.

2. Système de porte louvoyante selon la revendication 1,
**caractérisé en ce**
**que**, pendant le louvoiement du chariot (20), la commande (10) est montée, mobile en coulissement par rapport à l'organe de transmission (15), sur la plaque de montage (1).

3. Système de porte louvoyante selon la revendication 1,
**caractérisé en ce**
**qu'**au moins une coulisse de guidage (5) du chariot (20) est prévue sur la plaque de montage (1), le chariot (20) possédant un organe de guidage (21) pour son guidage par la coulisse de guidage (5).

4. Système de porte louvoyante selon la revendication 3,
**caractérisé en ce**
**que** la coulisse de guidage (5) est montée mobile en coulissement sur la plaque de montage (1).

5. Système de porte louvoyante selon la revendication 3 ou 4,
**caractérisé en ce**
**que** la coulisse de guidage (5) comporte une fente (5a) oblique orientée suivant la direction du déplacement de la commande (10) sur la plaque de montage (1) et comportant à son extrémité une partie recourbée (5b) orientée parallèlement à la direction de déplacement de la commande (10).

6. Système de porte louvoyante selon la revendication 4,
**caractérisé en ce**
**que** la coulisse de guidage et la commande (10) sont disposées sur le rail (2) disposé sur la plaque de montage (1).

7. Système de porte louvoyante selon la revendication 1,
**caractérisé en ce**
**que** l'organe de transmission (15) comprend une courroie dentée (16) périphérique qui est disposée sur la plaque de montage (1).

8. Système de porte louvoyante selon la revendication 7,
**caractérisé en ce**
**que** la commande (10) comprend un pignon (11) qui est en prise avec la courroie dentée (16).

9. Système de porte louvoyante selon la revendication 1,
**caractérisé en ce**
**que** l'organe de transmission (15) est relié à l'au moins un vantail par l'intermédiaire d'au moins un entraîneur (22).

10. Système de porte louvoyante selon la revendication 9,
**caractérisé en ce**
**que** l'entraîneur (22) comporte un guide longitudinal (22a) dans lequel est guidé un coulisseau (19) disposé sur l'organe de transmission (15).

11. Système de porte louvoyante selon la revendication 9,
**caractérisé en ce**
**que** le guide longitudinal (22a) de l'entraîneur (22) s'étend dans le sens de louvoiement du chariot (20).

12. Système de porte louvoyante selon la revendication 9,
**caractérisé en ce**
**qu'**une piste pour came (7) dans laquelle s'engage une came (25) montée sur l'au moins un vantail est disposée sur la plaque de montage (1).

13. Système de porte louvoyante selon la revendication 12,
**caractérisé en ce**
**que** la piste pour came (7) comporte un premier tronçon (7a) s'étendant parallèlement au louvoiement et dans le prolongement duquel se situe un deuxième tronçon (7b) orienté parallèlement au mouvement de l'au moins un vantail.

14. Système de porte louvoyante selon la revendication 13,
**caractérisé en ce**
**que** le deuxième tronçon (7b) se situe dans le prolongement du premier tronçon (7a) dans le sens du louvoiement.
